Europäisches Patentamt

(19) European Patent Office

Office européen des brevets

(11) Numéro de publication: **0 063 515**
**B1**

(12) FASCICULE DE BREVET EUROPEEN

(45) Date de publication du fascicule du brevet:
19.06.85

(51) Int. Cl.⁴: **B 29 D 3/02,** A 01 G 9/12,
B 29 D 23/00

(21) Numéro de dépôt: 82400611.8

(22) Date de dépôt: 02.04.82

(54) **Procédé de fabrication de tuteurs, installation pour la mise en oeuvre de ce procédé et tuteurs obtenus.**

(30) Priorité: 06.04.81 FR 8106842

(43) Date de publication de la demande:
27.10.82 Bulletin 82/43

(45) Mention de la délivrance du brevet:
19.06.85 Bulletin 85/25

(84) Etats contractants désignés:
AT BE CH DE GB IT LI LU NL SE

(56) Documents cités:
DE - A - 2 165 470
DE - A - 2 814 773
FR - A - 1 249 734
FR - A - 1 341 163
FR - A - 2 132 594
FR - A - 2 196 906
GB - A - 1 117 021
LU - A - 55 263
US - A - 3 546 000
US - A - 3 895 896

(73) Titulaire: Simon, Jean-Pierre, La Salmonière,
F-44330 Vallet (FR)

(72) Inventeur: Simon, Jean-Pierre, La Salmonière,
F-44330 Vallet (FR)

(74) Mandataire: Boutin, Antoine et al, CABINET PIERRE
LOYER 18, rue de Mogador, F-75009 Paris (FR)

BUNDESDRUCKEREI BERLIN

## Description

L'invention concerne les tuteurs et plus particulièrement les tuteurs utilisés pour les vignes.

Les tuteurs pour vignes actuellement connus sont en bois, en fer, en béton ou en ardoise. Ils se sont révélés inadaptés aux nouvelles techniques de récolte issues de la mécanisation. En effet, du fait de leur section relativement importante (environ 40 à 80 mm), les tuteurs connus provoquent un écartement relativement important des tapis de ramassage se trouvant en partie basse des machines à vendanger. Il en résulte une perte de récolte. De même, et toujours en raison de leur section trop importante, ces tuteurs empêchent les batteurs des machines d'atteindre les grappes situées à leur proximité immédiate, ce qui constitue une deuxième cause de perte de récolte.

D'autre part, les tuteurs traditionnels présentent un certain nombre d'inconvénients découlant de leur nature particulière.

Ainsi, les tuteurs métalliques rouillent et se détériorent avec le risque de contaminer la récolte par des particules de fer; les tuteurs de bois finissent par pourrir et se détériorer et nécessitent un entretien constant; les tuteurs de béton ou d'ardoise sont trop rigides et se cassent sous l'action énergique des batteurs des machines à vendanger.

On connaît, d'autre part, des tuteus en matière synthétique tel que celui décrit dans la publication FR-A-2 132 594 obtenu par enroulement de fibres de verre sèches et de rubans de fibres de verre imprégnées de résine synthétique sur une âme en terphane.

De même, le brevet US-A-3 895 896 décrit des objets creux obtenus par l'application de tissus de fibres de verre imprégnées de résine synthétique autour d'une âme constituée de rubans de fibres de verre. Les fibres de verre sont ensuite recouvertes à sec de couches de tissu de fibres et l'ensemble passe dans un dispositif chauffant.

Mais les produits obtenus par les procédés ci-dessus sont trop onéreux pour pouvoir rivaliser avec les tuteurs traditionnellement utilisés dans les vignes et trop fragiles pour résister durablement à l'action des machines à vendanger.

L'invention vise à remédier à ces inconvénients en procurant un tuteur suffisamment résistant pour remplir sa fonction de tuteur tout en conservant une certaine souplesse pour éviter d'être endommagé sous l'action des machines à vendanger, ledit tuteur étant imputrescible et ayant une section beaucoup plus faible que celle des tuteurs habituels de sorte que les pertes de récolte dues à l'écartement des batteurs et des tapis de ramassage soient sensiblement diminuées, voire supprimées.

Ces résultats sont procurés par le tuteur obtenu selon le procédé de la présente invention, qui comporte de façon connue les étapes suivantes:

- on forme un faisceau de fils de fibres de verre disposées longitudinalement;

- on fait passer le faisceau ainsi formé dans un bain de résine de polyester;
- on fait passer le faisceau dans un conformateur tel qu'une filière;
- on bobine à sec sur le faisceau conformé au moins une couche de mèches ou tissu de fibres de verre;
- on soumet le cordon obtenu à un chauffage pour obtenir une polymérisation au moins partielle;
- et l'on coupe en sortie d'étuve le cordon en tronçons selon la longueur désirée;

et qui, selon l'invention, est caractérisé en ce que, entre les deuxième et troisième étapes, on applique sur le faisceau une charge de produits siliceux, tels que du sable ou du quartz et en ce que, entre les quatrième et cinquième étapes on bobine sur le cordon un film de polyester.

Selon un mode opératoire préféré du procédé selon l'invention, le faisceau de départ est constitué de deux demi-faisceaux, le premier passant dans un premier bain de résine préparé pour une polymérisation à haute température et comportant en outre un catalyseur de polymérisation à froid, le second passant dans un second bain de résine, préparé pour une polymérisation à haute température et comportant en outre un accélérateur réagissant à froid avec le catalyseur du premier bain.

Selon un autre aspect préférentiel du procédé, le produit siliceux est appliqué séparément sur chacun des deux demi-faisceaux, en sortie de bain, avant leur réunion à l'entrée du conformateur.

Selon un autre mode opératoire préféré, le procédé s'opère en continu, par traction sur l'extrémité du cordon en sortie d'étuve.

L'invention concerne en second lieu un dispositif pour la mise en œuvre du procédé qui, de manière connue, comporte, à la suite les uns des autres:

- un poste d'alimentation en fils de fibres de verre;
- au moins un bain de résine;
- des moyens pour conformer le cordon;
- au moins un dispositif pour le bobinage des mèches ou tissu de fibres de verre;
- des moyens de chauffage;
- un dispositif de découpe;

et qui est caractérisé en ce qu'il comporte en outre, un poste d'application des produits siliceux placé entre la sortie du bain ou des bains de résine (6, 7) et l'entrée du conformateur (10) et un dispositif de bobinage (17) du film polyester (18) placé entre le ou les dispositifs de bobinage à sec (12, 13) et l'entrée des moyens de chauffage (19).

L'invention concerne également, à titre de produit industriel nouveau, un tuteur composé d'un faisceau de fils de fibres de verre disposés longitudinalement, imprégnés de résine de polyester, et recouvert par au moins une couche périphérique de mêches ou tissu de fibres de verre imprégnées de résine, caractérisé en ce qu'il comporte une charge de produits siliceux mélangée au faisceau de fils de fibres de verre.

D'autres caractéristiques et avantages de l'invention apparaîtront au cours de la description qui va suivre d'un exemple de réalisation préférentiel donné à titre indicatif.

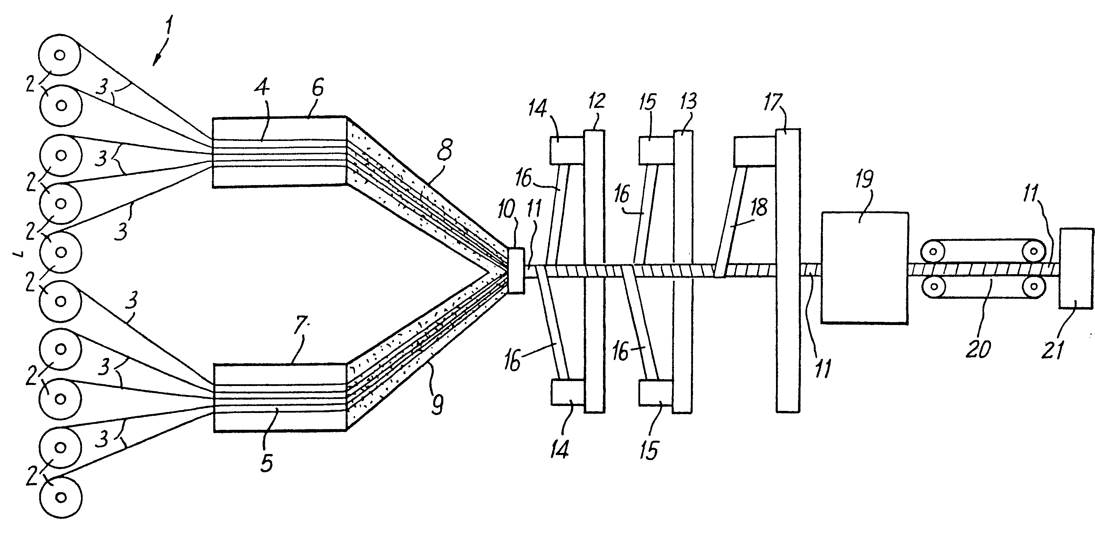

La description sera faite en référence au dessin annexé, qui représente schématiquement une chaîne pour la mise en œuvre du procédé.

Au poste 1 est situé le dispositif d'alimentation en fils de fibres de verre, qui peut être une batterie de bobines 2, dont les fils 3 sont tirés en deux demi-faisceaux 4 et 5 distincts, jusqu'à deux bains 6 et 7 contenant de la résine de polyester.

Le premier bain 6 est préparé pour une polymérisation à haute température et comporte en outre un catalyseur de polymérisation à froid.

Le second bain 7 est préparé pour une polymérisation à haute température, mais il comporte un accélérateur réagissant à froid au catalyseur du premier bain.

Cette disposition permet d'éviter la polymérisation des bains de résine à la température ambiante. Ainsi, lesdits bains restent utilisables en continu sur une longue durée, tandis que l'adjonction d'un catalyseur et d'un accélérateur à froid assure, après la réunion des deux demi-faisceaux hors des bains, un démarrage de la réaction de polymérisation qui permet d'écourter l'opération de chauffage et donc d'accélérer le rythme de production du cordon.

Selon un mode de réalisation préférentiel, les deux bains peuvent également contenir des additions de diverses charges spéficiques, par exemple des silices colloïdales pour tixotroper la résine, et du talc et du carbonate de chaux pour allonger les bains en économisant la résine.

D'autre part, les bains peuvent être teintés selon la couleur finale que l'on désire donner aux tuteurs.

Les résines polyesters utilisées sont de type courant. Elles peuvent être pré-stabilisées pour les rendre résistantes aux agressions extérieures. On peut également faire l'adjonction des produits stabilisants lors de la préparation des bains. Ces produits stabilisants ont pour effet notamment d'éviter la dégradation de la résine sous l'action des rayonnements lumineux.

A la sortie des bains 6 et 7, les demi-faisceaux sont soumis à un essorage par passage dans un dispositif tel que des rouleaux non représentés. A ce stade, les deux demi-faisceaux 4 et 5, imprégnés de résine, se présentent comme deux rubans plats.

Ils sont guidés l'un vers l'autre sur deux chemins convergents 8 et 9 aboutissant à un dispositif de conformation 10, tel qu'une filière.

Entre la sortie des bains et l'introduction dans le conformateur, on applique sur chacun des demi-faisceaux une charge de produits siliceux, tels que du sable ou du quartz. Cette adjonction de produits siliceux est destinée à permettre d'obtenir une augmentation du diamètre du cordon en économisant les matières onéreuses (résines et fibres), tout en conservant une bonne rigidité et élasticité dudit cordon.

En sortie de conformateur, le cordon 11 est de préférence de section cylindrique. Il peut cependant être conformé à volonté en section carrée, triangulaire, ovale, ou toute autre forme appropriée ou désirée.

Le cordon 11 passe dans un dispositif de bobinage qui, dans l'exemple représenté, est constitué par deux tambours 12, 13, disposés transversalement à la direction d'avancement du cordon. Lesdits tambours sont entraînés en rotation par des moyens non représentés et portent des bobines 14 et 15 de mèches, rubans ou tissus de fibres de verre 16. Le cordon 11 passe au centre des tambours 12 et 13 et les mèches de fibres de verre sont appliquées à sec sur le cordon. La combinaison du mouvement longitudinal du cordon 11 et du mouvement de rotation des tambours 12 et 13 assure un enroulement automatique de ruban 16 sur le cordon.

On peut donner aux tambours 12 et 13 des sens de rotation opposés, de manière à obtenir une application croisée des rubans 16.

Les rubans 16 s'imprègnent de résine au contact du cordon 11.

Ce dernier passe ensuite à travers un autre tambour transversal 17, analogue aux tambours 12 et 13, mais qui porte une bobine de film polyester 18. L'application de ce film polyester est destinée à permettre une polymérisation à l'abri de l'air, d'autre part il contribue à une bonne imprégnation des rubans 16 par la résine.

Derrière le tambour 17, le cordon passe dans un dispositif de chauffage 19, tel qu'un four tunnel. Le passage dans le four s'effectue pendant une durée suffisante pour assurer une polymérisation de la résine.

En raison de l'application du film polyester 18 sur le cordon 11, il n'est pas nécessaire que la polymérisation soit complète à la sortie du four. Il suffit que le cordon ait obtenu un durcissement tel qu'il permette sa préhension par les moyens de traction 20, situés à la sortie du four et qui assurent le déplacement linéaire en continu du cordon.

Les moyens de traction 20 peuvent être, par exemple, deux chaînes sans fin, entraînant le cordon par pincement.

Un dispositif de découpe 21 est placé en fin de chaîne derrière les moyens de traction 20, pour tronçonner le cordon en tuteurs de la longueur désirée. Les tuteurs obtenus par la mise en œuvre du procédé et du dispositif ci-dessus sont, pour une résistance équivalente aux tuteurs usuels, d'un diamètre sensiblement deux fois moindre.

Cette réduction de leur diamètre élimine l'écartement des parties actives des machines à vendanger et les pertes de récolte consécutives. Les tuteurs sont en outre résistants et suffisamment souples pour absorber sand détérioration les contraintes de battage des machines à vendanger. Du fait de leur diamètre réduit, les tuteurs ont une pénétration dans le sol améliorée et leur mise en place est beaucoup plus rapide et aisée que celle des tuteurs traditionnels.

Ils sont enfin imputrescibles.

A titre de comparaison, on peut, à l'aide du procédé, réaliser des tuteurs de un mètre de hauteur (hors sol), dont le diamètre est d'environ 20 mm.

Cette indication n'est pas limitative. Les dimensions et la composition des tuteurs peuvent être modifiées en fonction des conditions d'utilisation, et notamment de la hauteur de palissage et la nature des raisins.

D'autre part, les tuteurs selon l'invention peuvent avoir de multiples applications à d'autres domaines, par exemple tuteurs pour arbres fruitiers, pour clôtures, poteaux pour cordes à linge, etc.

## Revendications

1. Procédé de fabrication de tuteur comportant les étapes suivantes:

1. on forme un faisceau de fibres de verre (4, 5) disposées longitudinalement;
2. on fait passer le faisceau ainsi formé dans un bain de résine polyester (6, 7);
3. on fait passer le faisceau dans un conformateur (10) tel qu'une filière;
4. on bobine à sec sur le faisceau conformé au moins une couche de mèches ou de tissu de fibres de verre (16);
5. on soumet le cordon (11) obtenu à un chauffage pour obtenir une polymérisation au moins partielle:
6. on coupe après chauffage le cordon (11) en tronçons de la longueur désirée;

caractérisé en ce que, entre les deuxième et troisième étapes, on applique sur le faisceau une charge de produits siliceux, tels que du sable ou du quartz et en ce que, entre les quatrième et cinquième étapes on bobine sur le cordon (11) un film de polyester (18).

2. Procédé selon la revendication 1, caractérisé en ce que le faisceau de départ est constitué de deux demi-faisceaux, le premier (4) passant dans un premier bain de résine (6) préparé pour une polymérisation à haute température et comportant, en outre, un catalyseur de polymérisation à froid, le second (5) passant dans un second bain de résine (7) préparé pour une polymérisation à haute température et comportant en outre un accélérateur réagissant à froid avec le catalyseur du premier bain.

3. Procédé selon la revendication 2, caractérisé en ce que le produit siliceux est appliqué séparément sur chacun des demi-faisceaux (4, 5), en sortie de bain (6, 7), avant leur réunion à l'entrée du conformateur (10).

4. Procédé selon l'une quelconque des revendications 1 à 3, caractérisé en ce qu'il est mis en œuvre en continu par traction sur le cordon (11) en sortie d'étuve (19).

5. Dispositif pour la mise en œuvre du procédé selon l'une quelconque des revendications précédentes, comportant successivement:

— un poste d'alimentation (1) en fils de fibres de verre (3) tel qu'une batterie de bobines (2),
— au moins un bain de résine (6, 7),
— des moyens (10) pour conformer le cordon (11),
— au moins un dispositif pour le bobinage à sec des mèches ou tissu de fibres de verre (12, 13),
— des moyens de chauffage (19),
— un dispositif de découpe (21) du cordon (11),

caractérisé en ce qu'il comporte en outre un poste d'application des produits siliceux placé entre la sortie du bain ou des bains de résine (6, 7) et l'entrée du conformateur (10) et un dispositif de bobinage (17) d'un film polyester (18) placé entre le ou les dispositifs de bobinage à sec (12, 13) et l'entrée des moyens de chauffage (19).

6. Dispositif selon la revendication 5, caractérisé en ce que, entre le dispositif de chauffage (19) et les moyens de découpe (21), est disposé un mécanisme d'entraînement en continu (20) du cordon (11).

7. Dispositif selon la revendication 5 ou 6, caractérisé en ce qu'il comporte des moyens de séparation du faisceau de fils en fibres de verre en deux demi-faisceaux (4, 5), deux bains de résine (6, 7) parallèles et deux chemins convergents (8, 9) guidant les demi-faisceaux de la sortie des bains de résine jusqu'au dispositif de conformation (10) du cordon (11), un dispositif pour l'application des produits siliceux étant associé à chacun desdits chemins.

8. Tuteur composé d'un faisceau (4, 5) de fils (3) de fibres de verre disposés longitudinalement imprégnés de résine de polyester, recouverts par au moins une couche périphérique de mèches (15) ou tissu de fibres de verre (16), imprégnées de résine, caractérisé en ce qu'il comporte une charge de produits siliceux mélangée au faisceau de fibres de verre.

## Patentansprüche

1. Verfahren zur Herstellung von Stützstangen, bestehend aus den folgenden Stufen:

1. es wird ein Bündel von der Länge nach angeordneten Glasfasern (4, 5) gebildet;
2. das Bündel wird durch ein Polyesterharzbad (6, 7) geführt;
3. das Bündel läuft durch einen Former (10) von der Art einer Düse;
4. auf das geformte Bündel wird trocken mindestens eine Lage Lunte oder Glasgewebe (16) gewickelt;

5.   der so entstandene Strang (11) wird einer Erhitzung unterzogen, um eine zumindest teilweise Polymerisation zu erzielen;

6.   nach der Erhitzung wird der Strang (11) in Teilstücke von gewünschter Länge geschnitten;

dadurch gekennzeichnet, daß auf das Bündel zwischen der zweiten und der dritten Stufe eine Lage eines Siliziumproduktes, wie etwa Sand oder Quarz, aufgebracht wird und daß der Strang (11) zwischen der vierten und der fünften Stufe mit einer Polyesterfolie (18) umwickelt wird.

2. Verfahren nach Anspruch 1, dadurch gekennzeichnet, daß das Ausgangsbündel aus zwei Bündelhälften besteht, von denen die erste (4) durch ein erstes Harzbad (6) geführt wird, das der Hochtemperaturpolymerisation dient und unter anderem einen Kaltpolymerisationskatalysator umfaßt, während die zweite (5) durch ein zweites Harzbad (7) geführt wird, das der Hochtemperaturpolymerisation dient und unter anderem einen Beschleuniger umfaßt, der kalt mit dem Katalysator des ersten Bades reagiert.

3. Verfahren nach Anspruch 2, dadurch gekennzeichnet, daß das Siliziumprodukt getrennt auf jede einzelne Bündelhälfte (4, 5) beim Austritt aus dem Bad (6, 7) und vor ihrer Verbindung beim Eintritt in den Former (10) aufgebracht wird.

4. Verfahren nach den Ansprüchen 1 bis 3, dadurch gekennzeichnet, daß es stetig durch Zug an dem Strang (11) bei dessen Austritt aus dem Wärmeschrank (19) angewandt wird.

5. Einrichtung zur Anwendung des Verfahrens nach den vorgenannten Ansprüchen mit

—   einer Glasfaserfäden(3)-Zufuhrvorrichtung (1) von der Art einer Reihe Spulen (2),
—   mindestens einem Harzbad (6, 7),
—   Mitteln (10) zur Formung des Strangs (11),
—   mindestens einer Vorrichtung zum trockenen Wickeln der Lunte bzw. des Glasgewebes (12, 13),
—   Mitteln zum Erhitzen (19),
—   einer Strang(11)-Ablängsvorrichtung (21),

dadurch gekennzeichnet, daß sie unter anderem eine Vorrichtung zum Aufbringen der Siliziumprodukte umfaßt, die zwischen dem Austritt aus dem Harzbad bzw. den Harzbädern (6, 7) und dem Eintritt in den Former (10) angeordnet ist, sowie eine Polyesterfolien(18)-Umwickelvorrichtung (17), die zwischen der bzw. den Trockenwickelvorrichtungen (12, 13) und dem Eintritt in die Erhitzungsmittel (19) angeordnet ist.

6. Einrichtung nach Anspruch 5, dadurch gekennzeichnet, daß zwischen der Erhitzungsvorrichtung (19) und den Ablängmitteln (21) eine stetige Strang(11)-Vorschubvorrichtung (20) angebracht ist.

7. Einrichtung nach Anspruch 5 bzw. 6, dadurch gekennzeichnet, daß sie Mittel zur Trennung des Glasfaserbündels in zwei Bündelhälften (4, 5), zwei parallel angeordnete Harzbäder (6, 7) und zwei zusammenlaufende Führungen (8, 9) der Bündelhälften vom Ausgang der Harzbäder bis zur Strang(11)-Formvorrichtung (10) umfaßt, wobei jede Führung mit einer Vorrichtung zum Aufbringen der Siliziumprodukte versehen ist.

8. Stützstange, bestehend aus einem Bündel (4, 5) von der Länge nach angeordneten, mit Polyesterharz getränkten, mit mindestens einer einlagigen Umwicklung mit Lunte (15) oder Glasgewebe (16) bedeckten, beharzten Glasfaserfäden (3), dadurch gekennzeichnet, daß sie eine Lage von mit den Glasfaserbündeln verbundenen Siliziumprodukten umfaßt.

## Claims

1. Stake manufacturing method including the following steps:

1.   a bundle of glass fiber yarns (4, 5) arranged longitudinally is formed;

2.   the bundle thus formed is passed in a polyester resin bath (6, 7);

3.   the bundle is passed through a former (10) such as a die;

4.   at least one layer of glass fiber sliver or glass fiber cloth is wounded when dry on the formed bundle;

5.   the cord (11) obtained is subjected to heat in order to obtain curing, at least partial;

6.   after heating, the cord (11) is cut into sections of the length required;

wherein between the second and third steps, a filler of siliceous products such as sand or quarz is applied to the bundle, and wherein between the fourth and fifth steps a polyester film (18) is wound on the cord (11).

2. Method according to claim 1 wherein the starting bundle is made of two half-bundles, the first one (4) passing through a first resin bath (6) prepared for a high temperature curing and comprising, moreover a curing catalyst in the cold state, the second one (5) passing through a second resin bath (7) prepared for a high temperature curing and comprising, moreover, an accelerator reacting in the cold state with the catalyst of the first bath.

3. Method according to claim 2, wherein the silicoeous product is separately applied on each of the two half-bundles (4, 5), when coming out of the baths (6, 7) prior their assembly at the inlet of the former (10).

4. Method according to any of the claims 1 to 3, characterized in that it is carried out continuously by traction on the cord (11) when coming out of the dying oven (19).

5. Device for carrying out the method according any one of the preceding claims comprising successively:

— a glass fiber yarn (3) feeding station (1) such as a battery of rells (2),

— at least one resin bath (6, 7),

— means (10) for forming the cord (11),

— at least one device for dry winding the glass fiber slivers or glass fiber cloth (12, 13),

— heating means (19),

— a cutting device (21) for the cord (11),

characterized in that it comprises moreover a siliceous product application station arranged between the outlet of the resin bath or baths (6, 7) and the inlet of the former (10) and one winding device (17) for a polyester film (18) arranged between the dry winding device or devices (12, 13) and the inlet of the heating means (19).

6. Device according to claim 5, wherein between the heating device (13) and the cutting means (21) is arranged a continuous driving mechanism (20) of the cord (11).

7. Device according claim 5 or 6, characterized in that it comprises means for separating the bundle of glass fiber yarns in two half-bundles (4, 5), two parallel resin baths (6, 7) and two converging paths (8, 9) guiding the half-bundles from the outlet of the resin baths to the cord (11) forming device (10), a device for the application of the siliceous products being associated with each of the said paths (8, 9) guiding the half-bundles from the outlet of the resin baths to the cord (11) forming device (10) a device for the application of the siliceous products being associated with each of the said paths.

8. Stake comprising a bundle (4, 5) of glass-fiber yarns (3) arranged longitudinally, impregnated with polyester resin coated with at least one layer of peripheral fiber glass slivers (15) of fiber glass cloth (16), characterized in that it comprises a silicous products filler mixed with the glass fiber bundle.

0 063 515